# EUROPEAN PATENT APPLICATION

(11) **EP 4 317 263 A1**
(43) Date of publication of application: **07.02.2024**
(21) Application number: 22780563.7
(22) Date of filing: 25.03.2022
(51) Int. Cl.: C08J 3/20, C08K 5/544, C08L 23/00, C08L 81/02, C08G 75/0209, C08G 75/0231, C08G 75/0259

(54) **POLYPHENYLENE SULFIDE RESIN COMPOSITION AND METHOD FOR PRODUCING SAME**

(30) Priority: 29.03.2021 JP 2021054871; 09.12.2021 JP 2021199955
(71) Applicant: Toray Industries, Inc., Tokyo 103-8666 (JP)
(72) Inventor: YAMANOUE, Hisashi, Nagoya-shi, Aichi 455-8502 (JP); ATARASHI, Tomohiro, Nagoya-shi, Aichi 455-8502 (JP); SAITO, Kei, Nagoya-shi, Aichi 455-8502 (JP)
(74) Representative: Mewburn Ellis LLP
(86) International application number: PCT/JP2022/014348
(87) International publication number: WO 2022/210350

(57) **Abstract**

A polyphenylene sulfide resin composition obtained by mixing 100 parts by weight of a polyphenylene sulfide resin (A) having a melt viscosity of more than 200 Pa·s at a temperature of 310°C, a ratio LID of an orifice length L to an orifice diameter D of 10 and a shear rate of 1,216/s, and 3 parts by weight to 25 parts by weight of an olefinic elastomer resin (B), wherein the melt viscosity at the temperature of 320°C, the ratio LID of the orifice length L to the orifice diameter D of 40 and the shear rate of 4,700/s is 120 Pa·s or more and 200 Pa·s or less, and a weight loss on heating is 0.8% by weight or less when heated in an air atmosphere at the temperature of 320°C for 2 hours. Provided is a polyphenylene sulfide resin composition having excellent impact resistance, low burr properties and low gas properties.

## Description

### [Technical Field]

The present invention relates to a polyphenylene sulfide resin composition.

### [Background Art]

Polyphenylene sulfide resins (hereinafter sometimes abbreviated as PPS resins) have properties suitable for engineering plastics, such as excellent heat resistance, chemical resistance, electrical insulation properties and moisture and heat resistance, and are used in various electric and electronic components, mechanical components and automotive components and the like by allowing to undergo injection molding and extrusion molding.

However, since PPS resins have lower impact resistance compared with other engineering plastics such as nylon and polybutylene terephthalate, there has long been studied a technique of mixing PPS resins with olefinic resins for applications requiring high impact resistance.

For example, Patent Literature 1 discloses a method of mixing a polyphenylene sulfide resin with an ethylene/α-olefin copolymer having excellent impact resistance. However, the ethylene/α-olefin copolymer has a lower solidification temperature compared with PPS, thus causing a problem that burrs are easily generated during molding.

Patent Literature 2 discloses a PPS resin composition in which burrs generated during injection molding are reduced by mixing a polyphenylene sulfide resin with an alkoxysilane compound as a method of suppressing the generation of burrs during molding. Patent Literature 3 discloses a method of continuously feeding a polyphenylene sulfide resin and an alkoxysilane compound independently to an extruder.

### [Citation List]

### [Patent Literature]

[Patent Literature 1] JP 2000-198923 A
[Patent Literature 2] JP 11-158280 A
[Patent Literature 3] JP 2008-24740 A

### [Summary of Invention]

### [Technical Problem]

However, when mixing a PPS resin with an alkoxysilane compound, the method mentioned in Patent Literature 2 requires the addition of relatively large amount of the alkoxysilane compounds because insufficient reaction between the PPS resin and the alkoxysilane compound occurs when melt-kneading in an extruder. Therefore, gas derived from the alkoxysilane compound forms mold deposits (deposits adhered on the mold surface) during molding of the PPS resin, thus causing problems such as poor surface appearance of the molded article, reduced dimensional accuracy of the molded article, and productivity loss due to the need of disassembly and cleaning of the mold. In method mentioned in Patent Literature 3, since the ignition point of the alkoxysilane compound is lower than the temperature at which the polyphenylene sulfide resin is melt-kneaded, there is concern about ignition if the alkoxysilane compound is directly charged as a liquid.

An object of the present invention is to obtain a polyphenylene sulfide resin composition which is excellent in impact resistance and generates less burrs and less gas during molding without significantly impairing inherent properties of a polyphenylene sulfide resin.

### [Solution to Problem]

The present inventors has intensively studied to solve the above problems, thus leading to the present invention.

That is, the present invention provides the following.
(1) A polyphenylene sulfide resin composition comprising 100 parts by weight of a polyphenylene sulfide resin (A) having a melt viscosity of more than 200 Pa·s at a temperature of 310°C, a ratio L/D of an orifice length L to an orifice diameter D of 10 and a shear rate of 1,216/s, and 3 parts by weight to 25 parts by weight of an olefinic elastomer resin (B), which are mixed with each other, wherein the melt viscosity at the temperature of 320°C, the ratio L/D of the orifice length L to the orifice diameter D of 40 and the shear rate of 4,700/s is 120 Pa·s or more and 200 Pa·s or less, and a weight loss on heating is 0.8% by weight or less when heated in an air atmosphere at the temperature of 320°C for 2 hours.
(2) The polyphenylene sulfide resin composition according to (1), wherein the polyphenylene sulfide resin (A) comprises (A1) a polyphenylene sulfide resin having an ash content of 0.10% by weight or less and (A2) a polyphenylene sulfide resin having an ash content of 0.20% by weight or more.
(3) The polyphenylene sulfide resin composition according to any one of (1) to (2), wherein the polyphenylene sulfide resin (A) has a branched structure and/or a crosslinked structure derived from a polyhalogenated aromatic compound having three or more halogen substituents per one molecule.
(4) The polyphenylene sulfide resin composition according to any one of (1) to (3), further comprising 0.05 part by weight to 3.0 parts by weight of an alkoxysilane compound having an amino group (C) relative to 100 parts by weight of the polyphenylene sulfide resin (A).
(5) A method for producing the polyphenylene sulfide resin composition according to (4), the method comprising mixing 1 part by weight to 25 parts by weight of 100 parts by weight of a polyphenylene sulfide resin (A) with 0.05 part by weight to 3.0 parts by weight of an alkoxysilane compound having an amino group (C) in advance to prepare an alkoxysilane compound premixed product (D); and individually feeding each of the alkoxysilane compound premixed product (D) and 99 parts by weight to 75 parts by weight of the remaining polyphenylene sulfide resin (A) to an extruder.
(6) The method for producing a polyphenylene sulfide resin composition according to (5), wherein the water content of the polyphenylene sulfide resin (A) to be fed to the extruder is adjusted to 1% by weight or less.

### [Advantageous Effects of Invention]

According to the present invention, it is possible to provide a PPS resin composition which has both low burr properties (generation of less burrs) and low gas properties (generation of less mold deposits) while maintaining high impact resistance by mixing a PPS resin with a specific ratio of an olefinic elastomer resin and controlling the melt viscosity and weight loss on heating of the PPS resin composition.

The polyphenylene sulfide resin composition of the present invention is useful for various applications such as electrical and electronic-related equipment, precision machinery-related equipment, office equipment, automotive and vehicular components, construction materials, packaging materials, furniture and daily necessities because of having excellent impact resistance, low burr properties and low gas properties.

### [Brief Description of the Drawings]

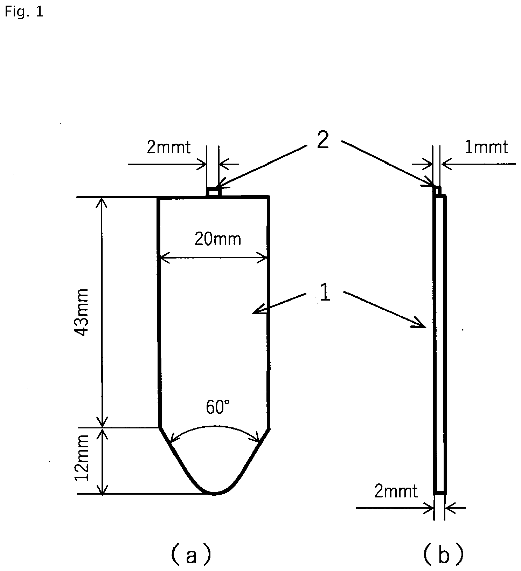

FIG. 1(a) is a top view of a molded article for evaluation of mold deposits, and FIG. 1(b) is a side view of the molded article (a).

### [Description of Embodiments]

Hereinafter, embodiments of the present invention will be described in detail.

The polyphenylene sulfide resin (A) used in the present invention is a polymer including a repeating unit represented by the following structural formula (I).

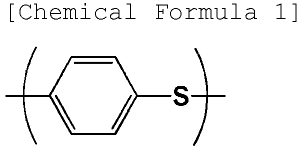

From the viewpoint of the heat resistance, a polymer including 70 mol% or more, and more preferably 90 mol% or more of the repeating unit represented by the above structural formula is preferable. The PPS resin may be composed of repeating units in which 30 mol% or less of the repeating units have any one of the following structures.

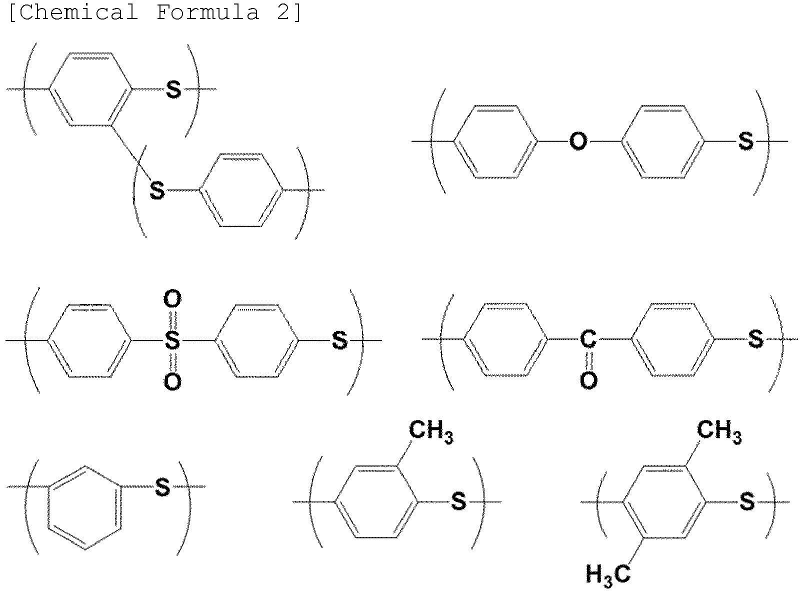

Hereinafter, the method for producing a PPS resin used in the present invention will be described. The PPS resin can be obtained by subjecting to a pre-treatment step, a polymerization reaction step and a recovery step mentioned below using raw materials mentioned below.

First, the contents of polyhalogenated aromatic compounds, sulfidizing agents, polymerization solvents, molecular weight modifiers, polymerization auxiliaries and polymerization stabilizers to be used will be described.

### [Polyhalogenated Aromatic Compound]

The polyhalogenated aromatic compound is a compound having two or more halogen atoms per one molecule. Specific examples thereof include dihalogenated benzenes such as p-dichlorobenzene, m-dichlorobenzene, o-dichlorobenzene, 2,5-dichlorotoluene, 2,5-dichloro-p-xylene, 1,4-dibromobenzene, 1,4-diiodobenzene and 1-methoxy-2,5-dichlorobenzene; 1,3,5-trichlorobenzene, 1,2,4-trichlorobenzene, 1,2,4,5-tetrachlorobenzene and hexachlorobenzene.

A p-dihalogenated aromatic compound is preferably used. It is also possible to use two or more different polyhalogenated aromatic compounds in combination to form a copolymer, but the content of the p-dihalogenated aromatic compound to be used is preferably 70 mol% or more, and more preferably 90 mol% or more. As the p-dihalogenated aromatic compound, p-dichlorobenzene is preferably used.

The amount of the polyhalogenated aromatic compound used is within a range of 0.9 mol to 2.0 mols, preferably 0.95 mol to 1.5 mols, and more preferably 1.005 mols to 1.2 mols, per 1 mol of the sulfidizing agent from the viewpoint of obtaining a PPS resin having a viscosity suitable for processing.

It is preferable to use, as a raw material for the PPS resin, a polyhalogenated aromatic compound having three or more halogen substituents per one molecule from the viewpoint of the burr reduction effect. It is preferable to use, as the polyhalogenated aromatic compound during the production of the PPS resin, a polyhalogenated aromatic compound having three or more halogen substituents per one molecule because a branched structure and/or crosslinked structure derived from the compound can be introduced. That is, the polyphenylene sulfide resin (A) used in the present invention preferably has a branched structure and/or a crosslinked structure derived from a polyhalogenated aromatic compound having three or more halogen substituents per one molecule. The branched structure is a structure in which another polymer chain is formed from the middle of a polymer chain, and a crosslinked structure refers to a three-dimensional structure in which a plurality of polymer chains are bridged. The polyhalogenated aromatic compound having three or more halogen substituents per one molecule is preferably polyhalogenated benzene having three or more halogen substituents per one molecule. Specific examples of the polyhalogenated benzenes having three or more halogen substituents per one molecule include 1,3,5-trichlorobenzene, 1,2,4-trichlorobenzene, 1,2,4,5-tetrachlorobenzene and hexachlorobenzene. Preferably, 1,3,5-trichlorobenzene is used.

The amount of the polyhalogenated aromatic compound having three or more halogen substituents per one molecule is 0.0001 mol to 0.01 mol, and preferably 0.0002 mol to 0.005 mol, per 1 mol of the sulfidizing agent.

### [Sulfidizing Agent]

Examples of the sulfidizing agent include alkali metal sulfides, alkali metal hydrosulfides and hydrogen sulfide.

Specific examples of the alkali metal sulfide include lithium sulfide, sodium sulfide, potassium sulfide, rubidium sulfide and cesium sulfide, and mixtures of two or more types thereof. Of these, sodium sulfide is preferably used. These alkali metal sulfides can be used in the form of a hydrate or an aqueous mixture, or an anhydride.

Specific examples of the alkali metal hydrosulfide include sodium hydrosulfide, potassium hydrosulfide, lithium hydrosulfide, rubidium hydrosulfide and cesium hydrosulfide, and mixtures of two or more types thereof. Of these, sodium hydrosulfide is preferably used. These alkali metal hydrosulfides can be used in the form of a hydrate or an aqueous mixture, or an anhydride.

It is also possible to use a sulfidizing agent which is prepared from an alkali metal hydrosulfide and an alkali metal hydroxide in situ in the reaction system. It is also possible to use a sulfidizing agent which is prepared from an alkali metal hydrosulfide and an alkali metal hydroxide and then transferred to a polymerization vessel.

Alternatively, it is also possible to use a sulfidizing agent prepared from an alkali metal hydroxide such as lithium hydroxide or sodium hydroxide, and hydrogen sulfide in situ in the reaction system. It is also possible to use a sulfidizing agent which is prepared from an alkali metal hydroxide such as lithium hydroxide or sodium hydroxide, and hydrogen sulfide in situ in the reaction system and then transferred to a polymerization vessel.

It is noted that when a partial loss of the sulfidizing agent occurs before the start of the polymerization reaction due to a dehydration operation or the like, the amount of the sulfidizing agent charged means the remaining amount after subtracting the loss from the actual charge amount.

It is also possible to use the alkali metal hydroxide and/or the alkaline earth metal hydroxide in combination with the sulfidizing agent. Specific examples of the alkali metal hydroxide include sodium hydroxide, potassium hydroxide, lithium hydroxide, rubidium hydroxide and cesium hydroxide, and mixtures of two or more types thereof. Specific examples of the alkaline earth metal hydroxide include calcium hydroxide, strontium hydroxide and barium hydroxide. Of these, sodium hydroxide is preferably used.

When the alkali metal hydrosulfide is used as the sulfidizing agent, it is particularly preferable that the alkali metal hydroxide is used simultaneously. The amount of the alkali metal hydroxide used is, for example, within a range of 0.95 to 1.20 mols, preferably 1.00 mol to 1.15 mols, and more preferably 1.005 mols to 1.100 mols, relative to 1 mol of the alkali metal hydrosulfide.

### [Polymerization Solvent]

It is preferable to use, as the polymerization solvent, an organic polar solvent. Specific examples thereof include N-alkylpyrrolidones such as N-methyl-2-pyrrolidone and N-ethyl-2-pyrrolidone; caprolactams such as N-methyl-ε-caprolactam; aprotic organic solvents typified by 1,3-dimethyl-2-imidazolidinone, N,N-dimethylacetamide, N,N-dimethylformamide, hexamethylphosphoric triamide, dimethyl sulfone and tetramethylene sulfoxide; and mixtures thereof. All of these solvents are preferably used because of having high reaction stability. Of these, N-methyl-2-pyrrolidone (hereinafter, sometimes abbreviated as NMP) is particularly preferably used.

The amount of the organic polar solvent used is preferably selected within a range of 2.0 mols to 10 mols, more preferably from 2.25 mols to 6.0 mols, and still more preferably 2.5 mols to 5.5 mols, relative to 1 mol of the sulfidizing agent.

### [Molecular Weight Modifier]

To form the end of the PPS resin to be produced, or to adjust the polymerization reaction or molecular weight, a monohalogen compound (not necessarily aromatic compound) can be used in combination with the above polyhalogenated aromatic compounds as the molecular weight modifier.

### [Polymerization Auxiliary]

It is also one of the preferred embodiments to use a polymerization auxiliary in order to obtain a PPS resin having a relatively high polymerization degree within a shorter period of time. As used herein, "polymerization auxiliary" refers to a substance which has an action to increase the viscosity of the resulting PPS resin. Specific examples of such polymerization auxiliary include carboxylates, water, alkali metal chlorides, sulfonates, alkali metal sulfates, alkaline earth metal oxides, alkali metal phosphates and alkaline earth metal phosphates. These may be used alone, or two or more types thereof can be used simultaneously. Of these, alkali metal carboxylates and/or water are preferably used.

The alkali metal carboxylate is a compound represented by the general formula: R(COOM)ₙ (wherein R represents an alkyl group, a cycloalkyl group, aryl group, alkylaryl group or arylalkyl group having 1 to 20 carbon atoms, M represents an alkali metal selected from lithium, sodium, potassium, rubidium and cesium, and n represents an integer of 1 to 3). The alkali metal carboxylate can also be used in the form of a hydrate, an anhydride or an aqueous solution. Specific examples of the alkali metal carboxylate include lithium acetate, sodium acetate, potassium acetate, sodium propionate, lithium valerate, sodium benzoate, sodium phenylacetate, potassium p-toluate, and mixtures thereof.

The alkali metal carboxylate may be formed by adding substantially equal chemical equivalents of an organic acid, and one or more types of compounds selected from the group consisting of an alkali metal hydroxide, an alkali metal carbonate and an alkali metal bicarbonate to cause a reaction. Of the above described alkali metal carboxylates, lithium salts have high solubility in the reaction system and have a large auxiliary effect, but are expensive, while potassium, rubidium, and cesium salts have low solubility in the reaction system, and sodium acetate, which is inexpensive and has moderate solubility in the polymerization system, is most preferably used.

The amount of the polymerization auxiliaries used is preferably within a range of 0.01 mol to 0.7 mol, more preferably 0.1 mol to 0.6 mol, and still more preferably 0.2 mol to 0.5 mol, relative to 1 mol of the sulfidizing agent, from the viewpoint of obtaining higher polymerization degree.

The use of water as the polymerization auxiliary is one of the effective means for obtaining a resin composition having highly balanced flowability with high toughness. In that case, the amount of water added is preferably within a range of 0.5 mol to 15 mols, more preferably 0.6 mol to 10 mols, and still more preferably 1 mol to 5 mols, relative to 1 mol of the sulfidizing agent, from the viewpoint of obtaining higher polymerization degree.

The timing for adding the polymerization auxiliary is not particularly limited, and the polymerization auxiliary may be added at any time during a pre-treatment step mentioned below, at the start of polymerization, and in the course of the polymerization. The polymerization auxiliary may be added in plural portions. When the alkali metal carboxylate is used as the polymerization auxiliary, it is more preferable to add the alkali metal carboxylate at the start of the pre-treatment step or at the start of the polymerization, simultaneously, since it is easy to add. When water is used as the polymerization auxiliary, it is effective to add water in the course of the polymerization reaction after charging the polyhalogenated aromatic compound.

### [Polymerization Stabilizer]

To stabilize the polymerization reaction system and to prevent a side reaction, the polymerization stabilizer can also be used. The polymerization stabilizer contributes to the stabilization of the polymerization reaction system, and inhibits an undesired side reaction. The generation of thiophenol may be exemplified as one of the guides for determining the occurrence of the side reaction. The generation of thiophenol can be suppressed by the addition of the polymerization stabilizer. Specific examples of the polymerization stabilizer include compounds such as alkali metal hydroxides, alkali metal carbonates, alkaline earth metal hydroxides and alkaline earth metal carbonate. Of these, alkali metal hydroxides such as sodium hydroxide, potassium hydroxide and lithium hydroxide are preferable. The alkali metal carboxylates are also included in the polymerization stabilizer used in the present invention, since they act as a polymerization stabilizer. While it has been mentioned above that when the alkali metal hydrosulfide is used as the sulfidizing agent, it is particularly preferable to use an alkali metal hydroxide simultaneously, the alkali metal hydroxide, which is in excess relative to the sulfidizing agent, can also serve as the polymerization stabilizer.

These polymerization stabilizers can be used alone, or two or more types thereof can be used in combination. The polymerization stabilizer is preferably used in the ratio of 0.02 mol to 0.2 mol, more preferably 0.03 mol to 0.1 mol, and still more preferably 0.04 mol to 0.09 mol, relative to 1 mol of the sulfidizing agent. If the ratio of the polymerization stabilizer is too small, insufficient stabilizing effect is exhibited, while too large ratio is economically disadvantageous and tends to lower the polymer yield.

The timing for adding the polymerization stabilizer is not particularly limited, and the polymerization stabilizer may be added at any time during a pre-treatment step mentioned below, at the start of polymerization, and in the course of the polymerization. The polymerization stabilizer may be added in plural portions. It is more preferable to add the polymerization stabilizer at the start of the pre-treatment step or at the start of the polymerization, simultaneously.

Next, the pre-treatment step, the polymerization reaction step and the recovery step will be specifically described in the order.

### [Pre-Treatment Step]

In the polymerization of the PPS resin, the sulfidizing agent is usually used in the form of a hydrate. It is preferable that before the addition of the polyhalogenated aromatic compound, a mixture containing an organic polar solvent and the sulfidizing agent is heated to remove an excessive amount of water out of the system. This step is referred to as a pre-treatment step. It is preferable to replenish the deficiency by adding water when excessive water was removed by this operation.

As mentioned above, it is also possible to use, as the sulfidizing agent, an alkali metal sulfide prepared from an alkali metal hydrosulfide and an alkali metal hydroxide in situ in the reaction system, or an alkali metal sulfide prepared in a vessel separate from the polymerization vessel. Examples of this method include, but is not particularly limited to, a method in which an alkali metal hydrosulfide and an alkali metal hydroxide are added to an organic polar solvent, preferably in an inert gas atmosphere at a temperature within a range of normal temperature to 150°C, and more preferably normal temperature to 100°C, and then the resulting mixture is preferably heated to 150°C or higher, and more preferably to 180 to 245°C, under normal pressure or reduced pressure, to distill off water. The polymerization auxiliary may be added at this stage. To facilitate removal of water by distillation, the reaction may be carried out by the addition of toluene or the like.

The amount of water in the polymerization system in the polymerization reaction is preferably 0.5 mol to 10.0 mol relative to 1 mol of the sulfidizing agent. As used herein, the amount of water in the polymerization system is the amount determined by subtracting the amount of water removed out of the polymerization system from the amount of water charged in the polymerization system. Water to be charged may be in any form such as water, an aqueous solution or crystal water.

### [Polymerization Reaction Step]

It is preferable that the sulfidizing agent is reacted with the polyhalogenated aromatic compound in an organic polar solvent at a temperature within a range of 200°C or higher and lower than 290°C to produce a PPS resin. This step is referred to as a polymerization reaction step.

When starting the polymerization reaction step, the sulfidizing agent and the polyhalogenated aromatic compound are added to the organic polar solvent, preferably in an inert gas atmosphere at a temperature within a range of room temperature to 215°C, and more preferably 100°C to 215°C. The polymerization auxiliary may be added at this stage. These raw materials may be charged in arbitrary order, and may be charged simultaneously.

The resulting mixture is usually heated to a temperature within a range of from 200°C to 290°C. The temperature rise rate is not particularly limited, but is preferably selected from a range of 0.01°C/min to 5°C/min selected, and more preferably 0.1°C/min to 3°C/min.

In general, the temperature is finally raised to 250°C to 290°C, and the reaction is carried out at the temperature, preferably for 0.25 hour to 50 hours, and more preferably 0.5 hours to 20 hours.

The effective method to obtain higher polymerization degree is a method in which a reaction is caried out, for example, at a temperature of 200°C to 245°C for a certain period of time before reaching the final temperature and then the temperature is raised to 270°C to 290°C. In that case, the reaction time at a temperature of 200°C to 245°C is preferably selected within a range of 0.25 hour to 20 hours, and more preferably 0.25 hour to 10 hours. To obtain a polymer having higher polymerization degree, it is effective when the conversion of polyhalogenated aromatic compounds in the system at 245°C reaches preferably 40 mol% or more, and more preferably 60 mol% or more.

### [Recovery Step]

After completion of the polymerization reaction, solids are recovered from the polymerization reaction product containing the polymer, the solvent and the like. This step is referred to as a recovery step. Any known method may be adopted for the recovery method.

For example, after completion of the polymerization reaction, it is possible to use a method in which the reaction product is allowed to cool slowly to recover a particulate polymer. There is not particular limitation on cooling rate. Usually, the cooling rate is preferably about 0.1°C/min to 3°C/min. There is no need to cool at the same rate in the entire step of the slow cooling step, and it is possible to adopt a method in which cooling is carried out at a rate of 0.1°C/min to 1°C/min until the polymer particles are crystallized and precipitated, and then cooling is carried out at a rate of 1°C/min or more.

It is also one of the preferred methods to recover under rapid cooling conditions. Examples of one preferred method of such recovery method include a flash method. The flash method is a method in which a polymerization reaction product is flashed from a state of high temperature and high pressure (usually 250°C or higher and 8 kg/cm² or more) into a normal pressure or reduced pressure atmosphere, thus simultaneously achieving the recovery of the solvent and the recovery of the resulting polymer in the form of a powder. As used herein, "flash" means that the polymerization reaction product is rejected through a nozzle. The atmosphere in which the polymerization reaction product is flashed is specifically, for example, nitrogen or water vapor under normal pressure, and the temperature is usually selected within a range of 150°C to 250°C.

The flash method is a recovery method excellent in economic efficiency, since the recovery of the solvent and the recovery of the solid can be simultaneously achieved within relatively short period of time. In this recovery method, an ionic compound typified by Na or an organic low molecular weight polymerization product (oligomer) tends to be incorporated into the polymer during the solidification process.

### [Post-treatment Step]

In the present invention, it is possible to further provide a post-treatment step in which the PPS resin produced through the pre-treatment step, polymerization reaction step and recovery step is subjected to a post-treatment. Examples of the post-treatment include an acid treatment, a hydrothermal treatment, washing with an organic solvent, an alkali metal treatment, an alkali earth metal treatment and the like.

The acid treatment is carried out as follows. The acid used in the acid treatment of the PPS resin is not particularly limited as long as it does not have an action to decompose the PPS resin. Examples of the acid include acetic acid, hydrochloric acid, sulfuric acid, phosphoric acid, silicic acid, carbonic acid and propylic acid. Of these, acetic acid and hydrochloric acid are more preferably used. The acid, which cause decomposition and deterioration of the PPS resin, such as nitric acid is not preferable.

The acid treatment method includes, for example, a method of immersing the PPS resin in an acid or an aqueous solution of the acid, and stirring or heating can be carried out as necessary. For example, when using acetic acid, sufficient effect can be obtained by immersing the PPS resin powder in an aqueous acetic acid solution with a pH of 4 heated to 80°C to 200°C and stirring for 30 minutes. The pH of the aqueous solution after the treatment may be 4 or higher, for example, about pH 4 to 8. To remove the acid or salt remaining from the PPS resin subjected to the acid treatment, it is preferable to wash the resin several times with water or warm water. The water used for washing is preferably distilled water or deionized water so as not to impair preferable chemical modification effect of the PPS resin by the acid treatment.

The hydrothermal treatment is carried out as follows. In the hydrothermal treatment of the PPS resin, the temperature of the thermal water is preferably 100°C or higher, more preferably 120°C or higher, still more preferably 150°C or higher, and particularly preferably 170°C or higher. The temperature of lower than 100°C is not preferable because of less preferable chemical modification effect of the PPS resin.

To exhibit preferable chemical modification effect of the PPS resin by the hydrothermal treatment, distilled water or deionized water is preferably used as water. There is no particular limitation on the operation of the hydrothermal treatment. The hydrothermal treatment is carried out by a method in which a predetermined amount of the PPS resin is put into a predetermined amount of water, followed by heating and stirring in a pressure vessel, or a method of continuously subjecting to a hydrothermal treatment. Although the ratio of water is preferably high, the ratio of the PPS resin to water, which is usually selected, is a bath ratio of 200 g or less of the PPS resin to 1 liter of water (weight of washing solution to weight of dry PPS).

Since decomposition of terminal groups is not preferable, the treatment is preferably carried out in an inert atmosphere in order to avoid the decomposition. After the hydrothermal treatment operation, the PPS resin is preferably washed several times with warm water in order to remove residual components.

Washing with the organic solvent is carried out as follows. The organic solvent used for washing the PPS resin is not particularly limited as long as it does not have an action to decompose the PPS resin. Examples thereof include organic solvents used for washing the PPS resin, for example, nitrogen-containing polar solvents such as N-methyl-2-pyrrolidone, dimethylformamide, dimethylacetamide, 1,3-dimethylimidazolidinone, hexamethylphosphorous amide and piperazinones; sulfoxide-sulfone-based solvents such as dimethyl sulfoxide, dimethyl sulfone and sulfolane; ketone-based solvents such as acetone, methyl ethyl ketone, diethyl ketone and acetophenone; ether-based solvents such as dimethyl ether, dipropyl ether, dioxane and tetrahydrofuran; halogen-based solvents such as chloroform, methylene chloride, trichloroethylene, ethylene dichloride, perchloroethylene, monochloroethane, dichloroethane, tetrachloroethane, perchloroethane and chlorobenzene; alcohol/phenolic solvents such as methanol, ethanol, propanol, butanol, pentanol, ethylene glycol, propylene glycol, phenol, cresol, polyethylene glycol and polypropylene glycol; and aromatic hydrocarbon-based solvents such as benzene, toluene and xylene. Of these organic solvents, solvents selected from N-methyl-2-pyrrolidone, acetone, dimethylformamide and chloroform are particularly preferably used. These organic solvents are used alone, or mixtures of two or more types thereof are used.

The method of washing with an organic solvent includes, for example, a method of immersing the PPS resin in the organic solvent, and stirring or heating can be appropriately carried out as necessary. There is no particular limitation on the washing temperature when the PPS resin is washed with the organic solvent, and it is possible to select arbitrary temperature of room temperature to about 300°C. As the washing temperature increases, washing efficiency may increase, and sufficient effect can be usually obtained at the washing temperature of normal temperature to 150°C. It is also possible to wash under pressure at a temperature of the boiling point or higher of the organic solvent in a pressure vessel. There is also no particular limitation on the washing time. In the case of batch washing, sufficient effect can be usually obtained by washing for 5 minutes or more, although it depends on the washing conditions. It is also possible to wash in a continuous manner. The post-treatment step is preferably carried out by any one of an acid treatment, a hydrothermal treatment and washing with an organic solvent, and it is preferable to use two or more types of treatments in combination from the viewpoint of impurity removal.

Examples of the method of the alkali metal treatment or alkaline earth metal treatment include a method in which an alkali metal salt or alkaline earth metal salt is added after removing residual oligomers and residual salts by washing with an organic solvent, or washing with warn or hot water. As the method of addition, it is preferable to wash the PPS resin in an aqueous solution containing an alkali metal salt or alkaline earth metal salt. By applying such alkali metal treatment or alkaline earth metal treatment, a PPS resin containing an alkali metal or alkaline earth metal can be obtained.

The alkali metal or alkaline earth metal are preferably introduced into the PPS resin in the form of an acetate, a hydroxide, a carbonate or the like. Further, it is preferable to remove excess alkali metal salt or alkaline earth metal salt by washing with warm water or the like.

The alkali metal ion concentration or alkaline earth metal ion concentration when introducing the alkali metal or alkaline earth metal is preferably 0.001 mmol or more relative to 1 g of the PPS resin. The treatment temperature is preferably 50°C or higher, more preferably 75°C or higher, and particularly preferably 90°C or higher. There is no particular limitation on the upper limit temperature. Usually, the upper limit temperature is preferably 280°C or lower from the viewpoint of the operability. The bath ratio (weight of washing liquid to dry PPS weight) is preferably 0.5 or more, more preferably 3 or more, and still more preferably 5 or more.

In the post-treatment step, from the viewpoint of obtaining a PPS resin composition having excellent moldability and heat resistance, it is preferable to use a method of an acid treatment or a treatment with an alkali metal salt or alkaline earth metal salt after removing residual oligomers and residual salts by washing with an organic solvent and hot water at about 80°C or by repeating the above-mentioned hot water treatment several times. A method of treating with an alkali metal salt or alkaline earth metal salt is particularly preferable.

The PPS resin used in the present invention may be further subjected to a thermal oxidation treatment after the acid treatment. The thermal oxidation treatment is a treatment of the PPS resin by heating in an oxygen atmosphere, or heating after the addition of a peroxide such as H₂O₂ or a vulcanizing agent such as sulfur. However, heating in an oxygen atmosphere is particularly preferable because of the ease of the treatment.

The heating apparatus for a thermal oxidation treatment may be an ordinary hot air dryer, or a rotary type heating apparatus or a heating apparatus equipped with a stirring blade. To carry out the treatment efficiently and more uniformly, it is more preferable to use a rotary type heating apparatus or a heating apparatus equipped with a stirring blade. The oxygen concentration in the atmosphere during the thermal oxidation treatment is desirably 2% by volume or more. The upper limit of the oxygen concentration is not particularly limited, but is about 50% by volume for safe operation, and more preferably 25% by volume or less. The thermal oxidation treatment temperature of the present invention is preferably 160°C to 270°C, more preferably 160°C to 220°C. If the thermal oxidation treatment is carried out at a temperature higher than 270°C, the thermal oxidation treatment proceeds rapidly, and thus it becomes difficult to control the treatment, leading to significant deterioration of the fluidity, which is not preferable. Meanwhile, if the temperature is lower than 160°C, the thermal oxidation treatment proceeds significantly slowly, leading to an increase in generation amount of the volatile component, which is not preferable. The treatment time is 0.2 hour to 50 hours, more preferably 0.5 hour to 10 hours, and still more preferably 1 hour to 5 hours. If the treatment time is less than 0.2 hour, the thermal oxidation treatment cannot be carried out sufficiently and the amount of the volatile components increases, which is not preferable. If the treatment time exceeds 50 hours, the crosslinking reaction due to the thermal oxidation treatment proceeds, leading to significant deterioration of the fluidity.

There is a need for the PPS resin used in the present invention to have a melt viscosity of more than 200 Pa·s at a temperature of 310°C, a ratio L/D of an orifice length L to an orifice diameter D of 10 and a shear rate of 1,216/s. If the melt viscosity is 200 Pa-s or less, the burr reduction effect is insufficient, which is not preferable. The lower limit of the melt viscosity is preferably 300 Pa·s or more, more preferably 400 Pa·s or more, and still more preferably 700 Pa·s or more. The upper limit of the melt viscosity is not particularly limited, but is preferably 1000 Pa-s or less, more preferably 900 Pa-s or less, and still more preferably 800 Pa-s or less, from the viewpoint of deterioration of the fluidity during molding.

When the PPS resin of the present invention contains two or more types of PPS resins, there is a need for the mixture of those PPS resins to satisfy the above range of the melt viscosity.

The melt viscosity of the PPS resin is the value measured under the conditions of a temperature of 310°C and a shear rate of 1,216/s using a capillary rheometer (Capilograph (registered trademark) 1D manufactured by Toyo Seiki Seisaku-sho, Ltd. and a capillary having an orifice length of 10 mm and an orifice diameter of 1 mm (L/D of 10)).

Examples of the method of obtaining a PPS resin having such melt viscosity include, but are not particularly limited to, a method of adjusting the weight-average molecular weight (Mw) in the polymerization reaction step or thermal oxidation treatment step.

From the viewpoint of a balance between the moldability and the burr reduction effect, the PPS resin used in the present invention preferably includes (A1) a PPS resin having an ash content of 0.10% by weight or less and (A2) a PPS resin having an ash content of 0.20% by weight or more. An increase in ash content means an increase in metal content in the PPS resin. If the metal content is too low, the reaction with the olefinic elastomer resin (B) tends to be excessive, leading to deterioration of the moldability, and deterioration of the mold deposit properties due to an increase in generated gas. If the metal content increases, the reactivity with the olefinic elastomer resin (B) tends to decrease, leading to deterioration of the impact resistance and burr reduction effect. From the viewpoint of a balance among the moldability, low burr resistance and low gas properties, it is preferable to use (A1) a PPS resin having an ash content of 0.10% by weight or less in combination with (A2) a PPS resin having an ash content of 0.20% by weight or more. The lower limit of the ash content of the PPS resin having an ash content of 0.10% by weight or less (A1) is preferably 0.00% by weight. The upper limit of the ash content is more preferably 0.09% by weight or less, and still more preferably 0.08% by weight or less. The lower limit of the ash content of the PPS resin having an ash content of 0.20% by weight or more (A2) is more preferably 0.21% by weight or more, and still more preferably 0.22% by weight or more. The upper limit of the ash content is more preferably 0.35% by weight or less, and still more preferably 0.30% by weight or less.

The ratio of the PPS resin having an ash content of 0.10% by weight or less (A1) to the PPS resin having an ash content of 0.20% by weight or more (A2) is not particularly limited, but the weight ratio (A1)/(A2) is preferably within a range of 5/95 to 95/5 from the viewpoint of a balance among the moldability, low burr properties and low gas properties. The lower limit of the ratio of PPS resin having an ash content of 0.10% by weight or less (A1) is preferably 10% by weight or more, more preferably 30% by weight or more, still more preferably 40% by weight or more, and most preferably 50% by weight or more, when the total of the PPS resin having an ash content of 0.10% by weight or less (A1) and the PPS resin having an ash content of 0.20% by weight or more (A2) is 100% by weight. The upper limit of the ratio of the PPS resin having an ash content of 0.10% by weight or less (A1) is not particularly limited, but is preferably 90% by weight or less, more preferably 80% by weight or less, and most preferably 70% by weight or less.

Examples of the method of adjusting the ash content of the PPS resin used in the present invention to 0.10% by weight or less include, but are not particularly limited to, a method in which a polymerized PPS resin powder is immersed in an aqueous acetic acid solution with a pH of 4 heated to 80°C to 200°C, followed by washing with stirring for 30 minutes or the like. Examples of the method of adjusting the ash content of the PPS resin used in the present invention to 0.20% by weight or more include, but are not particularly limited to, a method in which an alkali metal salt or an alkaline earth metal salt is added in a polymerization vessel at any of stages before, during and after the pre-treatment step, a method in which an alkali metal salt or an alkaline earth metal salt is added in a polymerization vessel at any of stages before, during and after the polymerization step, or a method in which an alkali metal salt or an alkaline earth metal salt is added in a polymerization vessel at any of first, middle and last stages. Of these, the easiest method includes a method in which an alkali metal salt or an alkaline earth metal salt is added after removing residual oligomers and residual salts by washing with an organic solvent, washing with warm water or washing with hot water. The alkali metal or alkaline earth metal is preferably introduced into PPS in the form of an acetate, a hydroxide, a carbonate and the like.

The polyphenylene sulfide resin composition of the present invention comprises (B) an olefinic elastomer resin mixed therein. Examples of the olefinic elastomer resin (B) include homopolymers of α-olefins such as ethylene, propylene, 1-butene, 1-pentene, 1-octene, 4-methyl-1-pentene and isobutylene, or (co)polymers obtained by polymerizing two or more types thereof; and copolymers of α-olefin with α,β-unsaturated acids and alkyl esters thereof such as acrylic acid, methyl acrylate, ethyl acrylate, butyl acrylate, methacrylic acid, methyl methacrylate, ethyl methacrylate and butyl methacrylate. Specific examples thereof include ethylene/propylene copolymers ("/" represents copolymerization, the same applies hereinafter), ethylene/1-butene copolymers, ethylene/1-hexene copolymers, ethylene/1-octene copolymers, ethylene/methyl acrylate copolymers, ethylene/ethyl acrylate copolymers, ethylene/butyl acrylate copolymers, ethylene/methyl methacrylate copolymers, ethylene/ethyl methacrylate copolymers, ethylene/butyl methacrylate copolymers and the like.

The olefinic elastomer resin (B) used in the present invention is preferably an α-olefinic copolymer having an epoxy group.

The α-olefin copolymer having an epoxy group can be obtained by introducing a functional group-containing component such as a glycidyl ester of α,β-unsaturated acid into an olefinic elastomer. Examples of the glycidyl ester of α,β-unsaturated acid include epoxy group-containing monomers such as glycidyl acrylate, glycidyl methacrylate, glycidyl ethacrylate, glycidyl itaconate and glycidyl citraconate. The method of introducing these functional group-containing components is not particularly limited, and it is possible to use a method of copolymerizing during copolymerization of an olefinic (co)polymer, or a method of introducing into an olefinic (co)polymer by graft polymerization using a radical initiator.

The amount of the functional group-containing component introduced is preferably 0.001 mol% to 40 mol%, and more preferably 0.01 mol% to 35 mol%, based on the total monomers constituting the α-olefinic copolymer having an epoxy group.

Specific examples of particularly useful α-olefinic copolymer having an epoxy group include an ethylene/propylene-g-glycidyl methacrylate copolymer ("g" represents graft, hereinafter the same), an ethylene/1-butene-g-glycidyl methacrylate copolymer, an ethylene/glycidyl acrylate copolymer, an ethylene/glycidyl methacrylate copolymer, an ethylene/methyl acrylate/glycidyl methacrylate copolymer, an ethylene/methyl methacrylate/glycidyl methacrylate copolymer and the like. Alternatively, it is also possible to suitably use an epoxy group-containing olefinic copolymer containing other monomers as essential components, in addition to α-olefins such as ethylene and propylene, and glycidyl esters of α,β-unsaturated acid.

It is necessary that the amount of the olefinic elastomer resin (B) used in the present invention is 3 to 25 parts by weight relative to 100 parts by weight of the polyphenylene sulfide resin (A). If the amount of the olefinic elastomer resin (B) mixed is less than 3 parts by weight relative to 100 parts by weight of the polyphenylene sulfide resin (A), the impact resistance is insufficient. If the amount of (B) the olefinic elastomer resin mixed exceeds 25 parts by weight relative to 100 parts by weight of the polyphenylene sulfide resin (A), the mechanical strength is lowered, and defects in appearance due to burrs and gas during molding are likely to occur. The lower limit amount of the olefinic elastomer resin (B) is preferably 4 parts by weight or more, more preferably 5 parts by weight or more, and still more preferably 6 parts by weight or more, relative to 100 parts by weight of the polyphenylene sulfide resin (A). The upper limit amount of the olefinic elastomer resin (B) is preferably 20 parts by weight or less, more preferably 15 parts by weight or less, and still more preferably 10 parts by weight or less, relative to 100 parts by weight of the polyphenylene sulfide resin (A).

Furthermore, it is preferable for the olefinic elastomer resin (B) to use (B-1) an α-olefinic copolymer having an epoxy group in combination with (B-2) an olefinic (co)polymer having no polar functional group in order to obtain excellent moldability and water pressure resistance strength. In this case, the amount of the epoxy group-containing α-olefin copolymer (B-1) is not particularly limited, but is preferably 6 parts by weight or less relative to 100 parts by weight of the polyphenylene sulfide resin (A) from the viewpoint of the moldability.

Examples of the olefinic (co)polymer having no polar functional group (B-2) include homopolymers of α-olefins such as ethylene, propylene, 1-butene, 1-penetene, 1-octene, 4-methyl-1-pentene and isobutylene, or (co)polymers obtained by polymerizing two or more types thereof. Specific examples thereof include ethylene/propylene copolymers ("/" represents copolymerization, the same applies hereinafter), ethylene/1-butene copolymers, ethylene/1-hexene copolymers and ethylene/1-octene copolymers. Ethylene/1-butene copolymers or ethylene/1-octene copolymers are preferable.

When using, as the olefinic elastomer resin (B), the α-olefin copolymer having an epoxy group (B-1) in combination with the olefin (co)polymer having no polar functional group (B-2), the ratio is not particularly limited, but the weight ratio of (B-1)/(B-2) is preferably 5/95 to 95/5 from the viewpoint of the burr reduction effect and moldability. The lower limit of the ratio of the α-olefin copolymer having an epoxy group the α-olefin copolymer having an epoxy group (B-1) is preferably 10% by weight or more, more preferably 40% by weight or more, still more preferably 50% by weight or more, yet more preferably 60% by weight or more, and most preferably 70% by weight or more, when the total of the α-olefin copolymer having an epoxy group (B-1) and the olefin (co)polymer having no polar functional group (B-2) is 100% by weight. The upper limit of the ratio of the α-olefin copolymer having an epoxy group (B-1) is preferably 90% by weight or less, more preferably 85% by weight or less, and still more preferably 80% by weight or less.

The polyphenylene sulfide resin composition of the present invention preferably further comprises (C) an alkoxysilane compound having an amino group. Examples of the alkoxysilane compounds having an amino group (C) include γ-(2-aminoethyl)aminopropylmethyldimethoxysilane, γ-(2-aminoethyl)aminopropyltrimethoxysilane, γ-aminopropyltrimethoxysilane, γ-aminopropyltriethoxysilane and the like. Of these, γ-aminopropyltriethoxysilane is particularly suitable for obtaining excellent burr reduction effect.

The amount of the alkoxysilane compound having an amino group (C) is preferably 0.05 part to 3.0 parts by weight relative to 100 parts by weight of the polyphenylene sulfide resin (A). If the amount of the alkoxysilane compound having an amino group (C) is 0.05 part by weight or more relative to 100 parts by weight of the polyphenylene sulfide resin (A), the burr reduction effect can be obtained, which is preferable. If the amount of the alkoxysilane compound containing an amino group (C) is 3.0 parts by weight or less relative to 100 parts by weight of the polyphenylene sulfide resin (A), satisfactory molding processability is obtained, which is preferable. The lower limit amount of the alkoxysilane compound having an amino group (C) is preferably 0.10 part by weight or more, more preferably 0.20 part by weight or more, and still more preferably 0.30 part by weight, relative to 100 parts by weight of the polyphenylene sulfide resin (A). The upper limit of the amount of the alkoxysilane compound having an amino group (C) is preferably 2.0 parts by weight or less, more preferably 1.5 parts by weight or less, and still more preferably 1.0 parts by weight or less, relative to 100 parts by weight of the polyphenylene sulfide resin (A).

The polyphenylene sulfide resin composition of the present invention can be used by being mixed with fibrous and/or non-fibrous fillers as long as the effects of the present invention are not impaired. Specific examples of such fillers include fibrous fillers such as glass fibers, carbon fibers, carbon nanotubes, carbon nanohorns, cellulose nanofibers, potassium titanate whiskers, zinc oxide whiskers, calcium carbonate whiskers, wollastonite whiskers, aluminum borate whiskers, aramid fibers, alumina fibers, silicon carbide fibers, ceramic fibers, asbestos fibers, gypsum fibers and metal fibers; fullerene; silicates such as talc, wollastonite, zeolite, sericite, mica, kaolin, clay, pyrophyllite, bentonite, asbestos and alumina silicate; metal compounds such as silicon oxide, magnesium oxide, alumina, zirconium oxide, titanium oxide and iron oxide; carbonates such as calcium carbonate, magnesium carbonate and dolomite; sulfates such as calcium sulfate and barium sulfate; and non-fibrous fillers such as glass beads, glass flakes, glass powders, ceramic beads, boron nitride, silicon carbide, carbon black, silica and graphite. These fillers may be hollow. It is also possible to use two or more types of these fillers in combination. These fillers may be used after being pretreated with coupling agents such as isocyanate-based compounds, organic silane-based compounds, organic titanate-based compounds, organic borane-based compounds and epoxy compounds. The upper limit of the amount of such fibrous and/or non-fibrous fillers mixed is preferably 15 parts by weight or less, more preferably 10 parts by weight or less, still more preferably 5 parts by weight or less, and most preferably 0 part by weight, relative to 100 parts by weight of the polyphenylene sulfide resin (A) from the viewpoint of the impact resistance. If the amount of the fibrous and/or fibrous fillers mixed is more than 15 parts by weight relative to 100 parts by weight of the polyphenylene sulfide resin (A), the impact resistance deteriorates, which is not preferable.

The polyphenylene sulfide resin composition of the present invention is preferably mixed with one or more antioxidants selected from phenolic antioxidants and phosphorus-based antioxidants in order to maintain high heat resistance and thermal stability as long as the effects of the present invention are not impaired. From the viewpoint of the heat resistance improvement effect, the amount of such antioxidant mixed is preferably 0.01 part by weight or more, and particularly preferably 0.02 part by weight or more, relative to 100 parts by weight of the polyphenylene sulfide resin (A). From the viewpoint of the gas component generated during molding, the amount is preferably 5 parts by weight or less, and particularly preferably 1 part by weight or less, relative to 100 parts by weight of the polyphenylene sulfide resin. It is preferable to use phenolic antioxidants and phosphorus-based antioxidants in combination because of particularly large effect of maintaining the heat resistance and thermal stability.

The polyphenylene sulfide resin composition of the present invention may be used after being mixed with resins other than the components (A) and (B) as long as the effects of the present invention are not impaired. Specific examples of such resin which can be mixed include, but not particularly limited to polyamide-based resins, polyester resins such as polyethylene terephthalate, polybutylene terephthalate, polycyclohexyl dimethylene terephthalate and polynaphthalene terephthalate; polyethylene, polypropylene, polytetrafluoroethylene, polyetherester elastomers, polyetheramide elastomers, polyamideimides, polyacetals, polyimides, polyetherimides, siloxane-copolymerized polyimides, polyether sulfones, polysulfone resins, polyallyl sulfone resins, polyketone resins, polyarylate resins, liquid crystal polymers, polyether ketone resins, polythioether ketone resins, polyether ether ketone resins, polyamideimide resins, tetrafluorinated polyethylene resins and the like.

As long as the effects of the present invention are not impaired, the polyphenylene sulfide resin composition of the present invention may be mixed with additives other than those mentioned above, for example, antioxidants and heat-resistant stabilizers (hydroquinone-based agents); weathering agents (resorcinol-based agents, salicylate-based agents, benzotriazole-based agents, benzophenone-based agents, hindered amine-based agents, etc.); mold release agents and lubricants (montanic acid, metal salts thereof, esters thereof and half esters thereof, stearyl alcohol, stearamide, bisurea, and polyethylene waxes, etc.); pigments (cadmium sulfide, phthalocyanine, carbon blacks for coloring, etc.); dyes (nigrosine, etc.), crystal nucleating agents (talc, silica, kaolin, clay, etc.), plasticizers (octyl p-oxybenzoate, N-butylbenzene sulfonamide, etc.); antistatic agents (alkyl sulfate-type anionic antistatic agents, quaternary ammonium salt-type cationic antistatic agents, nonionic antistatic agents such as polyoxyethylene sorbitan monostearate, betaine-based amphoteric antistatic agents, etc.); flame retardants (for example, red phosphorus, phosphoric acid ester, melamine cyanurate, hydroxides such as magnesium hydroxide and aluminum hydroxide, ammonium polyphosphate, brominated polystyrene, brominated polyphenylene ether, brominated polycarbonate, brominated epoxy resins, combinations of these bromine-based flame retardants with antimony trioxide, etc.); thermal stabilizers; lubricants such as calcium stearate, aluminum stearate and lithium stearate; strength improvers such as bisphenol epoxy resins including bisphenol A type epoxy resins, novolac phenol type epoxy resins and cresol novolac type epoxy resins; UV inhibitors; colorants; flame retardants; and foaming agents.

There is a need for the polyphenylene sulfide resin composition of the present invention to have a melt viscosity (Pa-s) of 120 Pa-s or more and 200 Pa·s or less at the temperature of 320°C, the ratio L/D of the orifice length L to the orifice diameter D of 40 and the shear rate of 4,700/s. By controlling the melt viscosity within the above range, not only excellent burr reduction effect is obtained, but also the mechanical strength and impact resistance are improved. If the melt viscosity is less than 120 Pa·s, the burr reducing effect is insufficient. If the melt viscosity exceeds 200 Pa·s, the fluidity deteriorates, leading to deterioration of the moldability and deterioration of the appearance of the molded article. The lower limit of the melt viscosity is preferably 125 Pa·s or more, more preferably 130 Pa·s or more, and still more preferably 135 Pa·s or more. The upper limit of the melt viscosity is preferably 190 Pa-s or less, and more preferably 180 Pa-s or less. The melt viscosity is the value measured under the conditions of a temperature of 320°C and a shear rate of 4,700 s⁻¹ using a capillary rheometer manufactured by YASUDA SEIKI SEISAKUSHO, LTD. and a capillary having an orifice length of 40 mm and an orifice diameter of 1 mm (L/D = 40). To obtain a PPS resin composition having such melt viscosity, for example, it is possible to exemplify a method of adjusting the ratio of the PPS resin having an ash content of 0.10% by weight or less (A1) to the PPS resin having an ash content of 0.20% by weight or more (A2), and the mixing amount and type of the olefinic elastomer resin (B).

There is a need for the polyphenylene sulfide resin composition of the present invention to have a weight loss on heating of 0.8% by weight or less when heated in an air atmosphere at the temperature of 320°C for 2 hours. By controlling the weight loss on heating within the above range, not only excellent low gas effect can be obtained, but also satisfactory product appearance can be obtained. If the weight loss on heating exceeds 0.8% by weight, the appearance of the molded article deteriorates due to an increase in mold deposits. The upper limit of the weight loss on heating is preferably 0.7% by weight or less, and more preferably 0.6% by weight or less. To obtain a PPS resin composition having such heat loss, for example, it is possible to exemplify a method of adjusting the ratio of the PPS resin having an ash content of 0.10% by weight or less (A1) to the PPS resin having an ash content of 0.20% by weight or more (A2), and the mixing amount and type of the olefinic elastomer resin (B).

Typical examples of the method for producing a polyphenylene sulfide resin composition of the present invention include, but are not particularly limited to, a method in which the above raw materials are mixed and then the mixture is fed to a known melt mixer such as a single-screw or twin-screw extruder, a Banbury mixer, a kneader and a mixing roll, followed by kneading.

Of these, preferred is a method of melt-kneading using a twin-screw extruder in which the ratio L/D of the screw length L to the screw diameter D is 10 or more and 100 or less. L/D is more preferably 20 or more and 100 or less, and still more preferably 30 or more and 100 or less.

There is no particular limitation on the mixing order of the raw materials when producing the polyphenylene sulfide resin composition of the present invention by melt-kneading, and it is possible to use any method such as a method in which all of the raw materials are fed through a main feed port and then melt-kneaded by the above-mentioned method, a method in which a part of the raw materials are melt-kneaded by the above-mentioned method and then mixed with the remaining raw materials, followed by melt-kneading, or a method in which a part of the raw materials are fed through the main feed port and then mixed with the remaining raw materials using a side feeder during melt-kneading by a single-screw or twin-screw extruder. Particularly preferred is a method in which those obtained by premixing 1 part by weight to 25 parts by weight of 100 parts by weight of the polyphenylene sulfide resin (A) with 0.05 part by weight to 3.0 parts by weight of an alkoxysilane compound having an amino group (C) (hereinafter referred to as (D) an alkoxysilane compound premixed product) are prepared, and then the alkoxysilane compound premixed product (D) and 99 parts by weight to 75 parts by weight of the remaining polyphenylene sulfide resin (A) are individually fed to an extruder, followed by melt-kneading. By mixing the raw materials by this method, a molded article with less burrs can be obtained by efficiently reacting the polyphenylene sulfide resin (A) with the alkoxysilane compound having an amino group (C).

The ratio of the polyphenylene sulfide resin (A) to the alkoxysilane compound having an amino group (C) in the alkoxysilane compound premixed product (D) is not particularly limited, but the weight ratio (A)/(C) is preferably within a range of 99.5/0.5 to 50/50, and more preferably 99/1 to 60/40, since the ignition temperature of the alkoxysilane compound having an amino group (C) is lower than the melt-kneading temperature of the polyphenylene sulfide resin composition of the present invention, there is a risk of ignition during feeding to the extruder.

It is possible to use, as the polyphenylene sulfide resin (A) in the alkoxysilane compound premixed product (D), any of a PPS resin having an ash content of 0.10% by weight or less (A1) and a PPS resin having an ash content of 0.20% by weight or more (A2). From the viewpoint of obtaining a molded article with less burrs generated by the reaction with the alkoxysilane compound having an amino group (C), it is preferable to use a PPS resin having an ash content of 0.10% by weight or less (A1).

A small amount of an additive component can be added before molding and then subjected to molding, after kneading and pelletizing other components by the above-mentioned method.

When the polyphenylene sulfide resin composition of the present invention is produced by melt-kneading, it is preferable that the water content of the polyphenylene sulfide resin (A) to be fed to the extruder is adjusted 1% by weight or less. If the water content of the polyphenylene sulfide resin (A) to be fed to the extruder exceeds 1% by weight, the reactivity with the alkoxysilane compound having an amino group (C) decreases and the burr reduction effect is reduced. The upper limit of the water content of the polyphenylene sulfide resin (A) is more preferably 0.8% by weight or less, and still more preferably 0.6% by weight or less. The method for obtaining a PPS resin having such water content is not particularly limited, but is preferably a method in which the polyphenylene sulfide resin (A) washed and recovered after polymerization is dried, and the drying temperature and drying time during drying are adjusted.

The PPS resin composition thus obtained can be subjected to various molding processes such as injection molding, extrusion molding, blow molding and transfer molding. The PPS resin composition is particularly suitable for use in injection molding applications.

The polyphenylene sulfide resin composition of the present invention can be preferably used for electric and electronic related equipment, precision machinery related equipment, office equipment, automotive and vehicular components, building materials, packaging materials, furniture and daily necessities.

Examples of applications in which a molded article composed of the PPS resin composition of the present invention can be used include electric and electronic components represented by sensors, LED lamps, connectors for consumer use, sockets, resistors, relay case switches, coil bobbins, condensers, casings for variable condensers, oscillators, various types of terminal boards, transformers, plugs, printed circuit boards, tuners, speakers, microphones, headphones, small motors, magnetic head bases, semiconductors, liquid crystals, FDD carriages, FDD chassis, motor brush holders, parabolic antennas, computer-related components and the like; and components for home appliances and electrical office products represented by VTR components, television components, irons, hair dryers, rice cooker components, microwave oven components, acoustic components, audio equipment components such as those for audio laser disks (registered trademarks) and compact disks, components for lighting equipment, refrigerator components, air conditioner components, typewriter parts, word processor parts and the like. Other examples of applications include machine-related components represented by office computer components, telephone-related parts, facsimile machine-related parts, copying machine-related parts, cleaning tools, motor parts, lighters, typewriters and the like; parts for optical devices and precision machinery represented by microscopes, binoculars, cameras, clocks and the like; automotive and vehicular components such as valve alternator terminals, alternator connectors, IC regulators, potentiometer bases for light deer, various valves such as exhaust gas valves, various pipes such as fuel-related pipes and exhaust- and air intake-related pipes, air intake nozzle snorkels, intake manifolds, fuel pumps, carburetor main bodies, carburetor spacers, exhaust gas sensors, coolant sensors, oil temperature sensors, throttle position sensors, crankshaft position sensors, air flow meters, brake pad wear sensors, thermostat bases for air conditioners, air flow control valves for heaters, brush holders for radiator motors, water pump impellers, turbine vanes, wiper motor-related components, distributors, starter switches, starter relays, wire harnesses for transmissions, window washer nozzles, substrates for air conditioner panel switches, fuel system-related solenoid valve coils, fuse connectors, horn terminals, insulating plates for electrical equipment, step motor rotors, lamp sockets, lamp reflectors, lamp housings, brake pistons, solenoid bobbins, engine oil filters, ignition device cases, vehicle speed sensors and cable liners; and consumer electronics.

### [Examples]

The present invention will be described more specifically by way of the following Examples. It is noted that the present invention is in no way limited these Examples.

### (1) Measurement of Melt Viscosity of PPS Resin (A)

Using a Capilograph (registered trademark) 1D manufactured by Toyo Seiki Seisaku-sho, Ltd. and a die (LID = 10) having an orifice length L of 10 mm and an orifice diameter D of 1 mm, a melt viscosity (Pa·s) was measured at a temperature of 310°C and a shear rate of 1,216/s.

### (2) Measurement of Ash Content of PPS Resin (A)

5.0 g of (A) a PPS resin was weighed in a crucible and fired at 550°C for 6 hours using a TMF-5 electric furnace manufactured by Thomas Kagaku Kikai Co., Ltd. After firing, the crucible was taken out and cooled in a desiccator with a desiccant, and then the weight of the collected residue was measured and the ash content was calculated as a percentage of the weight of the residue per unit weight of the PPS resin (A) before firing.

### (3) Measurement of Water Content of PPS Resin (A)

5.0 g of a PPS resin (A) was weighed in an aluminum petri dish and heated at 150°C for 1 hour using an oven. Thereafter, the aluminum petri dish was taken out and cooled in a desiccator with a desiccant, and then the weight of the PPS resin was weighed and the water content was calculated as a percentage of a weight loss after heating to the weight before heating.

### (4) Measurement of Melt Viscosity of Polyphenylene Sulfide Resin Composition

Using a capillary rheometer manufactured by YASUDA SEIKI SEISAKUSHO, LTD and a die (LID = 40) having an orifice length L of 40 mm and an orifice diameter D of 1 mm, a melt viscosity (Pa·s) was measured under the conditions of a temperature of 320°C and a shear rate of 4,700/s.

### (5) Burr Length

Using an SE30D injection molding machine, and using a 40 mm diameter × 3 mm thick disk-shaped mold with eight protrusions of (a) width 5 mm × length 20 mm × thickness 1,000 um, (b) width 5 mm × length 20 mm × thickness 700 um, (c) width 5 mm × length 20 mm × thickness 500 um, (d) width 5 mm × length 20 mm × thickness 300 um, (e) width 5 mm × length 20 mm × thickness 100 um, (f) width 5 mm × length 20 mm × thickness 50 µm, (g) width 5 mm × length 20 mm × thickness 20 µm and (h) width 5 mm × length 20 mm × thickness 10 um, the PPS resin composition was injection-molded under the conditions of a molding temperature of 320°C, a mold temperature of 130°C and an injection pressure of 50 MPa. The gate position was set at the center of the disk. The protruding portions (f) and (g) of the molded article thus obtained were magnified 50 times using a microscope manufactured by Keyence Corporation, and the filled length was measured to obtain the burr length. It was judged that the shorter the burr length, the better the low burr properties.

### (6) Measurement of Weight Loss on Heating of Polyphenylene Sulfide Resin Composition

10 g of PPS resin composition pellets of the present invention were weighed in an aluminum cup preheated at 330°C for 3 hours, and heated in a hot air dryer at 320°C for 2 hours. Thereafter, the aluminum cup was taken out, cooled in a desiccator with a desiccant, and then the weight was measured and the weight loss on heating was calculated as a percentage of a weight loss after heating to the weight before heating.

### (7) Measurement of Tensile Strength and Tensile Strain

PPS resin composition pellets of the present invention were dried at 130°C for 3 hours using a hot air dryer and fed to an injection molding machine (SE-50D) manufactured by Sumitomo Heavy Industries, Ltd., set at a cylinder temperature of 320°C and a mold temperature of 145°C, and then injection-molded under the conditions such that an average speed of a molten resin passing through the central parallel part of a test piece became 400150 mm/s using a mold with a type A1 test piece shape specified in ISO 20753 (2008) to obtain a test piece. After conditioning this test piece under the conditions of a temperature of 23°C and a relative humidity of 50% for 16 hours in accordance with ISO527-1, -2(2012), the tensile strength and tensile strain were measured in an atmosphere at a temperature of 23°C and a relative humidity of 50% under conditions of a distance between grippers of 114 mm and a test speed of 50 mm/s.

### (8) Measurement of Flexural Modulus

PPS resin composition pellets of the present invention were dried at 130°C for 3 hours using a hot air dryer and fed to an injection molding machine (SE-50D) manufactured by Sumitomo Heavy Industries, Ltd., set at a cylinder temperature of 320°C and a mold temperature of 145°C, and then injection-molded under the conditions such that an average speed of a molten resin passing through the central parallel part of a test piece became 400150 mm/s using a mold with a type A1 test piece shape specified in ISO 20753 (2008) to obtain a test piece. The central parallel portion of this test piece was cut out to obtain a type B2 test piece. After conditioning this test piece under the conditions of a temperature of 23°C and a relative humidity of 50% for 16 hours in accordance with ISO 178 (2010), the flexural modulus was measured in an atmosphere at a temperature of 23°C and a relative humidity of 50% under conditions of a spun of 64 mm and a test speed of 2 mm/s.

### (9) Measurement of Charpy Impact Strength (Notched)

PPS resin composition pellets of the present invention were dried at 130°C for 3 hours using a hot air dryer and fed to an injection molding machine (SE-50D) manufactured by Sumitomo Heavy Industries, Ltd., set at a cylinder temperature of 320°C and a mold temperature of 145°C, and then injection-molded under the conditions such that an average speed of a molten resin passing through the central parallel part of a test piece became 400150 mm/s using a mold with a type A1 test piece shape specified in ISO 20753 (2008) to obtain a test piece. The central parallel portion of this test piece was cut out to 80 mm obtain a V-notched test piece (4 mm wide, notched). After conditioning this test piece under the conditions of a temperature of 23°C and a relative humidity of 50% for 16 hours in accordance with ISO 179-1(2010), the Charpy impact strength was measured in an atmosphere at a temperature of 23°C and a relative humidity of 50%.

### (10) Mold deposit Properties

PPS resin composition pellets of the present invention were dried at 130°C for 3 hours using a hot air dryer and fed to an injection molding machine (SE-30D) manufactured by Sumitomo Heavy Industries, Ltd., set at a cylinder temperature of 320°C and a mold temperature of 130°C, and then continuous molding of a molded article 1 for evaluation of mold deposits shown in FIG. 1 using a mold for evaluation of mold deposits, and the mold deposits were evaluated. FIG. 1(a) is a top view of a molded article 1 for evaluation of mold deposits, and FIG. 1(b) is a side view thereof. Using a mold for evaluation of mold deposits (molded article 1: length 55 mm, width 20 mm, thickness 2 mm, gate 2: width 2 mm, thickness 1 mm; gas vent maximum length 20 mm, width 10 mm, depth 5 µm), continuous molding was carried out by setting an injection pressure such that an injection speed became 100 mm/s and the filling time became 0.4 second, and then mold contamination of the mold gas vent and cavity area was visually observed every 10 shots. The larger the number of shots until mold deposit adheres, the less mold deposits, which is preferable. If the number of shots is 100 shots or more, it can be said that the level is practically usable. The case where 150 shots or more until adhesion of mold deposit was evaluated as 1, the case where 100 shots or more and less than 150 shots was evaluated as 2, the case where 50 shots or more and less than 100 shots was evaluated as 3, and the case where less than 50 shots was evaluated as 4.

### (A) PPS Resin

### [Reference Example 1] Preparation of PPS (A)-1

In a 70 liter autoclave equipped with a stirrer, 8267.37 g (70.00 mols) of 47.5% sodium hydrosulfide, 2957.21 g (70.97 mols) of 96% sodium hydroxide, 11434.50 g (115.50 mols) of N-methyl-2-pyrrolidone (NMP), 2583.00 g (31.50 mols) of sodium acetate and 10500 g of ion exchanged water were charged, and after gradually heating to 245°C over about 3 hours while introducing nitrogen under normal pressure, 14780.1 g of water and 280 g of NMP were removed by distillation and the reaction vessel was cooled to 160°C. The amount of remaining water in the system per 1 mol of the charged alkali metal sulfide was 1.06 mols, including the amount of water consumed by hydrolysis of NMP. The amount of hydrogen sulfide evaporated and scattered was 0.02 mol per 1 mol of the charged alkali metal sulfide.

Subsequently, 10204.74 g (69.42 mols) of p-dichlorobenzene (p-DCB) and 9009.00 g (91.00 mols) of NMP were added and the reaction vessel was sealed under nitrogen gas, followed by temperature rise to 238°C at a rate of 0.6°C/min while stirring at 240 rpm. After reacting at 238°C for 95 minutes, the temperature was raised to 270°C at a rate of 0.8°C/min. After reacting at 270°C for 100 minutes, the reaction vessel was cooled to 250°C at a rate of 1.3°C/min while injecting 1260 g (70 mols) of water over 15 minutes. Thereafter, the reaction vessel was cooled to 200°C at a rate of 1.0°C/min and then rapidly cooled to near room temperature.

The content of the reaction vessel was taken out, diluted with 26300 g of NMP, and then the solvent and solids were separated by filtration using a sieve (80 mesh). The particles thus obtained were washed with 31900 g of NMP and separated by filtration. The resulting particles were washed several times with 56000 g of ion exchanged water and separated by filtration, and then washed with 70000 g of an aqueous 0.05% by weight acetic acid solution and separated by filtration. The particles were further washed with 70000 g of ion exchanged water and separated by filtration, and then the resulting water-containing PPS particles were dried with hot air at 80°C, followed by drying under reduced pressure at 120°C. PPS (A)-1 thus obtained had a melt viscosity of 220 Pa·s and an ash content of 0.04%.

### [Reference Example 2] Preparation of PPS (A)-2

In the same manner as in Reference Example 1, except that the amount of p-dichlorobenzene (p-DCB) used was 10235.46 g (69.63 mols), PPS was prepared. PPS (A)-2 thus obtained had a melt viscosity of 200 Pa·s and an ash content of 0.04%.

### [Reference Example 3] Preparation of PPS (A)-3

In an autoclave equipped with a stirrer, 8.26 kg (70.0 mols) of 47.5% sodium hydrosulfide and 2.94 kg (70.6 mols) of 96% sodium hydroxide, 11.45 kg (115.5 mols) of NMP, 2.58 kg (31.5 mols) of sodium acetate and 5.50 kg of ion exchanged water were charged, and after gradually heating to 240°C while introducing nitrogen under normal pressure, 9.82 kg of water and 0.28 kg of NMP were removed by distillation. At this point, heating was finished and cooling was started and the amount of remaining water in the system per 1 mol of the charged alkali metal sulfide was 1.01 mols, including the amount of water consumed by hydrolysis of NMP. Since the amount of hydrogen sulfide evaporated and scattered was 1.4 mols, the amount of the sulfidizing agent in the system after the dehydration step was 68.6 mols. Note that 1.4 mols of sodium hydroxide was newly generated in the system along with the scattering of hydrogen sulfide.

Subsequently, 10.24 kg (69.6 mols) of p-DCB and 9.37 kg (94.5 mols) of NMP were added and the reaction vessel was sealed under nitrogen gas, followed by temperature rise to 235°C from 200°C while stirring. After polymerizing at 235°C for 120 minutes, the temperature was raised to 255°C and 1.00 kg (56.0 mols) of deionized water was injected, followed by a polymerization reaction at 255°C for 300 minutes. After completion of the reaction, the reaction vessel was cooled to 200°C at a rate of 1.0°C/min and then rapidly cooled to near room temperature. The reactant was diluted with NMP to form a slurry, which was stirred at 85°C for 30 minutes and separated by filtration through an 80 mesh metal screen to obtain solids. The solids thus obtained were washed with NMP and separated by filtration in the same manner as in Reference Example 1. The operation of diluting the resulting solids with ion exchanged water, followed by stirring at 70°C for 30 minutes and further filtration through an 80 mesh wire mesh to collect solids was repeated four times. Thereafter, the solids were washed in an aqueous solution containing 0.5% by weight of calcium acetate relative to 1 g of the PPS resin and then filtered through an 80 mesh wire mesh to collect the solids. The solids thus obtained were dried at 120°C under nitrogen stream to obtain PPS (A)-3 having a melt viscosity of 300 Pa·s and an ash content of 0.21%.

### [Reference Example 4] Preparation of PPS (A)-4

In an autoclave equipped with a stirrer, 8.26 kg (70.0 mols) of 47.5% sodium hydrosulfide, 2.94 kg (70.6 mols) of 96% sodium hydroxide, 11.45 kg (115.5 mols) of NMP, 1.61 kg (19.6 mols) of sodium acetate and 5.50 kg of ion exchanged water were charged, and after gradually heating to 240°C while introducing nitrogen under normal pressure, 9.82 kg of water and 0.28 kg of NMP were removed by distillation. At this point, heating was finished and cooling was started and the amount of remaining water in the system per 1 mol of the charged alkali metal sulfide was 1.01 mols, including the amount of water consumed by hydrolysis of NMP. Since the amount of hydrogen sulfide evaporated and scattered was 1.4 mols, the amount of the sulfidizing agent in the system after this dehydration step was 68.6 mols. Note that 1.4 mols of sodium hydroxide was newly generated in the system along with the scattering of hydrogen sulfide.

Subsequently, 10.33 kg (70.2 mols) of p-DCB, 0.025 kg (0.14 mol) of 1,2,4-trichlorobenzene (TCB) and 9.37 kg (94.5 mols) of NMP were added and the reaction vessel was sealed under nitrogen gas, followed by temperature rise to 270°C from 200°C while stirring. The polymerization reaction was carried out by maintaining at 270°C for 180 minutes. After completion of the reaction, the reaction vessel was cooled to 200°C at a rate of 1.0°C/min and then rapidly cooled to near room temperature. In the same manner as in Reference Example 3, washing and drying were carried out to obtain PPS (A)-4 having a melt viscosity of 760 Pa·s and an ash content of 0.25%.

(B) Olefin-based elastomer resin
   B-1: Ethylene/glycidyl methacrylate copolymer (BONDFAST E, manufactured by Sumitomo Chemical Co., Ltd.)
   B-2: Ethylene/1-butene copolymer (TAFMER (registered trademark) A0550S, manufactured by Mitsui Chemicals Inc.).
(C) Alkoxysilane compound having an amino group γ-Aminopropyltriethoxysilane (KBE-903, manufactured by Shin-Etsu Chemical Co., Ltd.)
(D) Alkoxysilane compound premixed product

A part of PPS-1 (A) obtained in Reference Example 1 above was dry-blended with γ-aminopropyltriethoxysilane (C) in a weight ratio shown in Table 2 to obtain an alkoxysilane compound premixed product (D).

### (Production of PPS Resin Composition)

Using a twin-screw extruder having a diameter of 26 mm (TEM-26SS, manufactured by Toshiba Machine Co., Ltd.) set at a cylinder temperature of 300°C and a screw rotation speed of 300 rpm, a PPS resin (A), an olefinic elastomer resin (B) and an alkoxysilane compound (C) shown in Tables 1 and 2 were dry-blended in each weight ratio shown in Tables 1 and 2 and fed from a raw material feed port, and then melt-kneaded at a discharge rate of 40 kg/hour to obtain pellets. When using the alkoxysilane premixed product (D) as the raw material, the dry-blended raw material of the PPS resin (A) and the olefinic elastomer resin (B) in an amount obtained by subtracting the amount used for the premixed product, and the alkoxysilane premixed product (D) were individually fed through each raw material feed port.

Using the pellets thus obtained, each of the above properties was evaluated. The results are shown in Tables 1 and 2.

**[Table 1]**

| | | | Example 1 | Example 2 | Example 3 | Example 4 | Example 5 | Example 6 | Example 7 | Example 8 | Example 9 |
|---|---|---|---|---|---|---|---|---|---|---|---|
| (A) PPS resin | (A)-1 | Parts by weight | 100 | | 60 | 60 | 60 | 60 | 60 | 60 | 60 |
| | (A)-2 | Parts by weight | | | | | | | | | |
| | (A)-3 | Parts by weight | | 100 | 40 | | | | | | |
| | (A)-4 | Parts by weight | | | | 40 | 40 | 40 | 40 | 40 | 40 |
| (B) Olefinic elastomer resin | (B)-1 | Parts by weight | 3 | 3 | 3 | 3 | 4 | 5 | 3 | 3 | 10 |
| | (B)-2 | Parts by weight | 3 | 3 | 3 | 3 | 2 | 1 | 3 | 3 | 10 |
| (C) Alkoxysilane compound | | Parts by weight | | | | | | | 0.05 | 0.5 | 0.5 |
| (A) Melt viscosity of PPS resin | | Pa·s | 220 | 300 | 270 | 440 | 440 | 440 | 440 | 440 | 440 |
| (A) Water content of PPS resin | | % | 0.1 | 0.1 | 0.1 | 0.1 | 0.1 | 0.1 | 0.1 | 0.1 | 0.1 |
| Melt viscosity of PPS resin composition | | Pa·s | 121 | 133 | 131 | 142 | 148 | 154 | 145 | 155 | 185 |
| Burr length at 20 µm in thickness | | µm | 330 | 270 | 250 | 200 | 160 | 110 | 160 | 80 | <5 |
| Burr length at 50 µm in thickness | | µm | 530 | 450 | 410 | 380 | 300 | 190 | 300 | 170 | 10 |
| Weight loss on heating | | % | 0.71 | 0.40 | 0.58 | 0.52 | 0.51 | 0.51 | 0.53 | 0.57 | 0.78 |
| Tensile strength | | MPa | 70 | 70 | 69 | 71 | 71 | 71 | 71 | 72 | 58 |
| Tensile strain | | % | 15 | 12 | 16 | 18 | 19 | 20 | 19 | 20 | 25 |
| Flexural modulus | | MPa | 2,950 | 2,980 | 2,900 | 3,060 | 3,060 | 3,050 | 3,080 | 3,370 | 2,750 |
| Notched Charpy impact strength | | kJ/m² | 6 | 6 | 8 | 9 | 7 | 6 | 10 | 13 | 33 |
| Mold deposit properties | | - | 1 | 1 | 1 | 1 | 1 | 1 | 1 | 1 | 2 |

**[Table 2]**

| | | | Example 10 | Example 11 | Example 12 | Example 13 | Comparative Example 1 | Comparative Example 2 | Comparative Example 3 | Comparative Example 4 |
|---|---|---|---|---|---|---|---|---|---|---|
| (A) PPS resin | (A)-1 | Parts by weight | 45 | 55 | 55 | 60 | | 60 | 60 | 60 |
| | (A)-2 | Parts by weight | | | | | 100 | | | |
| | (A)-3 | Parts by weight | | | | | | | | |
| | (A)-4 | Parts by weight | 40 | 40 | 40 | 40 | | 40 | 40 | 40 |
| (B) Olefinic elastomer resin | (B)-1 | Parts by weight | 3 | 3 | 4 | 3 | 3 | 15 | 1 | 3 |
| | (B)-2 | Parts by weight | 3 | 3 | 2 | 3 | 3 | 15 | 1 | 3 |
| (C) Alkoxysilane compound | | Parts by weight | | | | 0.5 | | 0.5 | 0.5 | 3.5 |
| (D) Alkoxysilane compound premixed product | (A)-1 | Parts by weight | 15 | 5 | 5 | | | | | |
| | (C) | Parts by weight | 0.5 | 0.5 | 0.5 | | | | | |
| (A) Melt viscosity of PPS resin | | Pa·s | 470 | 450 | 450 | 440 | 200 | 440 | 440 | 440 |
| (A) Water content of PPS resin | | % | 0.1 | 0.1 | 0.1 | 1.2 | 0.1 | 0.1 | 0.1 | 0.1 |
| Melt viscosity of PPS resin composition | | Pa·s | 167 | 176 | 181 | 143 | 115 | 203 | 116 | 210 |
| Burr length at 20 µm in thickness | | µm | 10 | <5 | <5 | 210 | 410 | <5 | 400 | <5 |
| Burr length at 50 µm in thickness | | µm | 70 | 30 | 20 | 390 | 620 | <5 | 600 | <5 |
| Weight loss on heating | | % | 0.59 | 0.62 | 0.62 | 0.50 | 0.85 | 0.95 | 0.47 | 0.87 |
| Tensile strength | | MPa | 71 | 72 | 72 | 72 | 70 | 36 | 80 | 75 |
| Tensile strain | | % | 21 | 22 | 23 | 15 | 16 | 57 | 8 | 23 |
| Flexural modulus | | MPa | 3,380 | 3,480 | 3,460 | 3,050 | 2,920 | 1,600 | 3,300 | 3,600 |
| Notched Charpy impact strength | | kJ/m² | 23 | 26 | 20 | 8 | 7 | 42 | 5 | 45 |
| Mold deposit properties | | - | 1 | 1 | 1 | 1 | 3 | 4 | 1 | 3 |

### [Examples 1 to 13]

The PPS resin compositions of Examples 1 to 13 shown in Tables 1 and 2 exhibited satisfactory impact resistance, excellent low burr properties, weight loss on heating of 0.8% by weight or less, and excellent low gas properties.

### [Comparative Example 1]

Comparative Example 1 shown in Table 2 was inferior in low burr properties since the melt viscosity of the PPS resin composition was less than 120 Pa·s.

### [Comparative Example 2]

Comparative Example 2 shown in Table 2 were inferior in low gas properties, moldability and mechanical strength since the amount of the olefinic elastomer added exceeds 25 parts by weight and the melt viscosity exceeds 200 Pa-s.

### [Comparative Example 3]

Comparative Example 3 shown in Table 2 was inferior in impact resistance since the amount of the olefin elastomer added was less than 3 parts by weight.

### [Comparative Example 4]

Comparative Example 4 shown in Table 2 were inferior in moldability and low gas properties since the melt viscosity of the PPS resin composition exceeded 200 Pa·s and the weight loss on heating exceeded 0.8% by weight.

### [Industrial Applicability]

The polyphenylene sulfide resin composition of the present invention can be preferably used for applications such as electric and electronic related equipment, precision machinery related equipment, office equipment, automotive and vehicular components, building materials, packaging materials, furniture and daily necessities because of its excellent impact resistance, low burr property and low gas property.

### [Description of Reference Numeral]

1. Molded article for evaluation of mold deposits
2. Gate

## Claims

1. A polyphenylene sulfide resin composition comprising 100 parts by weight of a polyphenylene sulfide resin (A) having a melt viscosity of more than 200 Pa·s at a temperature of 310°C, a ratio LID of an orifice length L to an orifice diameter D of 10 and a shear rate of 1,216/s, and 3 parts by weight to 25 parts by weight of an olefinic elastomer resin (B), which are mixed with each other, wherein the melt viscosity at the temperature of 320°C, the ratio LID of the orifice length L to the orifice diameter D of 40 and the shear rate of 4,700/s is 120 Pa-s or more and 200 Pa-s or less, and a weight loss on heating is 0.8% by weight or less when heated in an air atmosphere at the temperature of 320°C for 2 hours.

2. The polyphenylene sulfide resin composition according to claim 1, wherein the polyphenylene sulfide resin (A) comprises (A1) a polyphenylene sulfide resin having an ash content of 0.10% by weight or less and (A2) a polyphenylene sulfide resin having an ash content of 0.20% by weight or more.

3. The polyphenylene sulfide resin composition according to any one of claims 1 to 2, wherein the polyphenylene sulfide resin (A) has a branched structure and/or a crosslinked structure derived from a polyhalogenated aromatic compound having three or more halogen substituents per one molecule.

4. The polyphenylene sulfide resin composition according to any one of claims 1 to 3, further comprising 0.05 part by weight to 3.0 parts by weight of an alkoxysilane compound having an amino group (C) relative to 100 parts by weight of the polyphenylene sulfide resin (A).

5. A method for producing the polyphenylene sulfide resin composition according to claim 4, the method comprising mixing 1 part by weight to 25 parts by weight of 100 parts by weight of a polyphenylene sulfide resin (A) with 0.05 part by weight to 3.0 parts by weight of an alkoxysilane compound having an amino group (C) in advance to prepare an alkoxysilane compound premixed product (D); and individually feeding each of the alkoxysilane compound premixed product (D) and 99 parts by weight to 75 parts by weight of the remaining polyphenylene sulfide resin (A) to an extruder.

6. The method for producing a polyphenylene sulfide resin composition according to claim 5, wherein the water content of the polyphenylene sulfide resin (A) to be fed to the extruder is adjusted to 1% by weight or less.
